# EUROPÄISCHE PATENTANMELDUNG

(11) **EP 4 456 270 A1**
(43) Veröffentlichungstag der Anmeldung: **30.10.2024**
(21) Anmeldenummer: 23170134.3
(22) Anmeldetag: 26.04.2023
(51) Int. Cl.: H01M 50/107, H01M 50/119, H01M 50/152, H01M 50/159, H01M 50/545

(54) **ELEKTROCHEMISCHES ENERGIESPEICHERELEMENT**

(71) Anmelder: VARTA Microbattery GmbH, 73479 Ellwangen Jagst (DE)
(72) Erfinder: Drews, Verena, Giengen 89537 (DE); Elmer, Martin, 73479 Ellwangen (DE)
(74) Vertreter: Ostertag & Partner Patentanwälte mbB

(57) **Zusammenfassung**

Beschrieben wird ein elektrochemisches Energiespeicherelement 100 mit einem Elektroden-Separator-Verbund 20 und einem Gehäuse, das den Verbund 20 umschließt. Das Gehäuse weist eine Verschlussbaugruppe 10 auf, die ein erstes Metallblechteil 11 mit einer ersten Seite 11a, einer gegenüberliegenden zweiten Seite 11b und einer Durchbrechung 11c sowie ein zweites Metallblechteil 12 mit einem Kontaktsegment 12a, einem Fixiersegment 12b und einer rohrförmigen Durchführung 12c umfasst. Das Kontaktsegment 12a erstreckt sich auf der ersten Seite 11a und das Fixiersegment 12b auf der zweiten Seite 11b des ersten Metallblechteils 1, wobei die rohrförmige Durchführung 12c die beiden Segmente 12a und 12b durch die Durchbrechung 11c hindurch verbindet. Die Verschlussbaugruppe 10 umfasst weiterhin eine elektrisch isolierende Dichtung 13, die zwischen dem ersten Metallblechteil 11 und dem zweiten Metallblechteil 12 angeordnet ist und diese elektrisch voneinander isoliert. Ein erster Teil des Fixiersegments 12b ist als Boden 12ba, der die rohrförmige Durchführung 12c auf der zweiten Seite 11b verschließt, ausgebildet, wobei der Boden 12ba eine in Richtung der Durchführung 12c gerichtete Innenseite 12baa und eine in eine Gegenrichtung gerichtete Außenseite 12bab aufweist. Ein zweiter Teil des Fixiersegments 12b ist als Auskragung 12bb, die eine formschlüssige Fixierung der rohrförmigen Durchführung 12c in der Durchbrechung 11c und damit einen festen Zusammenhalt des ersten Metallblechteils 11 und des zweiten Metallblechteils 12gewährleistet, ausgebildet. Die erste Seite 11a des ersten Metallblechteils 11 und das Kontaktsegment 12a begrenzen einen ersten Spalt 14, die zweite Seite 11b des ersten Metallblechs und die Auskragung 12bb begrenzen einen zweiten Spalt 15, wobei die Dichtung 13 den ersten Spalt 14 und den zweiten Spalt 15 derart befüllt, dass die erste Seite 11a von der zweiten Seite 11b gas- und/oder flüssigkeitsdicht getrennt ist. Die Elektroden-Separator-Verbund 20 ist mittels Verschweißung an die Außenseite 12bab des Bodens 12ba, der die rohrförmige Durchführung 12c auf der zweiten Seite 11b verschließt, angebunden.

## Beschreibung

Die nachstehend beschriebene Erfindung betrifft ein elektrochemisches Energiespeicherelement.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden.

Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Verbundkörper in Form eines Wickels. Moderne Lithium-Ionen-Zellen dieses Formfaktors können eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle ein Kontaktblechteil auf, das auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Aus der WO 2022/167586 A1 sind elektrochemische Zellen bekannt, die Elektrodenwickel wie die in der WO 2017/215900 A1 aufweisen. Auch hier ist beschrieben, dass ein freier Rand eines Stromkollektors an ein Kontaktblechteil angebunden ist. Dieses Kontaktblechteil umfasst eine zentrale Ausstülpung, die durch eine Durchbrechung im Zellgehäuse geführt ist und als Poldurchführung dient. Die Montage dieser Zelle gestaltet sich allerdings schwierig. Ein Anschweißen der Stromkollektoren an das Kontaktblechteil ist praktisch unmöglich.

Aus der US 7364817 B2 ist ebenfalls ein Zelldesign bekannt, bei dem Strom aus einer Zelle über ein Kontaktblechteil abgegriffen wird. Dieses Kontaktblechteil ist über einen separaten Stromleiter mit einer mehrteiligen Deckelbaugruppe verbunden. Mit dem separaten Stromleiter geht allerdings unvermeidlich ein Totvolumen innerhalb der Zelle einher, welches sich negativ auf deren Energiedichte auswirkt.

### AUFGABE UND LÖSUNG

Der nachfolgend beschriebenen Erfindung lag die Aufgabe zugrunde, elektrochemische Energiespeicherelemente mit so wenig Totvolumen wie möglich zu konstruieren, die sich durch eine einfache Assemblierung und kostengünstige Bauteile auszeichnen.

Diese Aufgabe wird durch das Energiespeicherelement mit den Merkmalen des Anspruchs 1 gelöst. Bevorzugte Ausführungsformen des erfindungsgemäßen Energiespeicherelements sind in den abhängigen Ansprüchen definiert.

### Erfindungsgemäßes Energiespeicherelement

Das erfindungsgemäße Energiespeicherelement umfasst einen Elektroden-Separator-Verbund und ein Gehäuse, das den Elektroden-Separator-Verbund umschließt, und zeichnet sich durch die unmittelbar folgenden Merkmale a. bis j. aus:
a. Das Gehäuse umfasst eine Verschlussbaugruppe.
b. Die Verschlussbaugruppe umfasst ein erstes Metallblechteil mit einer ersten Seite, einer gegenüberliegenden zweiten Seite und einer Durchbrechung;
c. Die Verschlussbaugruppe umfasst ein zweites Metallblechteil mit einem Kontaktsegment, einem Fixiersegment und einer rohrförmigen Durchführung, wobei sich das Kontaktsegment auf der ersten Seite und das Fixiersegment auf der zweiten Seite des ersten Metallblechteils erstreckt und die rohrförmige Durchführung die beiden Segmente durch die Durchbrechung hindurch verbindet;
d. Die Verschlussbaugruppe umfasst eine elektrisch isolierende Dichtung, die zwischen dem ersten und dem zweiten Metallblechteil angeordnet ist und diese elektrisch voneinander isoliert;
e. Ein erster Teil des Fixiersegments ist als Boden, der die rohrförmige Durchführung auf der zweiten Seite verschließt, ausgebildet, wobei der Boden eine in Richtung der Durchführung gerichtete Innenseite und eine in eine Gegenrichtung gerichtete Außenseite aufweist und;
f. Ein zweiter Teil des Fixiersegments ist als Auskragung, die eine formschlüssige Fixierung der rohrförmigen Durchführung in der Durchbrechung und damit einen festen Zusammenhalt des ersten und des zweiten Metallblechteils gewährleistet, ausgebildet;
g. Die erste Seite des ersten Metallblechteils und das Kontaktsegment begrenzen einen ersten Spalt;
h. Die zweite Seite des ersten Metallblechs und die Auskragung begrenzen einen zweiten Spalt;
i. Die Dichtung befüllt den ersten und den zweiten Spalt derart, dass die erste Seite von der zweiten Seite gas- und/oder flüssigkeitsdicht getrennt ist; und
j. Der Elektroden-Separator-Verbund ist mittels Verschweißung an die Außenseite des Bodens, der die rohrförmige Durchführung auf der zweiten Seite verschließt, angebunden.

Das Kontaktsegment dient beispielsweise zur Kontaktierung eines externen Verbrauchers oder eines elektrischen Leiters, über den das erfindungsgemäße Energiespeicherelement mit weiteren Energiespeicherelementen elektrisch gekoppelt ist. Beispielsweise kann ein Stromleiter auf das Kontaktsegment geschweißt werden, um das erfindungsgemäße Energiespeicherelement seriell oder parallel mit weiteren Energiespeicherelementen zu verschalten. Das Fixiersegment dient zur elektrischen Kontaktierung des Elektroden-Separator-Verbunds und insbesondere zur Fixierung des zweiten Metallblechteils in der Durchbrechung des ersten Metallblechteils.

Ein Verschlussbaugruppe dieser Ausgestaltung gewährleistet, dass sich zwischen dem Elektroden-Separator-Verbund und der Verschlussbaugruppe fast kein Totvolumen findet. Die Verschlussbaugruppe umfasst eine integrierte Poldurchführung, wobei das gleiche Metallbauteil, das die Durchführung realisiert, auch an eine metallische Komponente des Elektroden-Separator-Verbunds geschweißt werden kann.

In bevorzugten Ausführungsformen zeichnet sich das erfindungsgemäße Energiespeicherelement durch eines der unmittelbar folgenden Merkmale a. und b. aus:
a. Der Elektroden-Separator-Verbund umfasst einen Stromkollektor, der unmittelbar an die Außenseite des Bodens, der die rohrförmige Durchführung auf der zweiten Seite verschließt, geschweißt ist.
b. Der Elektroden-Separator-Verbund umfasst einen Stromkollektor, der an einen Stromleiter geschweißt ist, welcher unmittelbar an die Außenseite des Bodens, der die rohrförmige Durchführung auf der zweiten Seite verschließt, geschweißt ist.

Unmittelbar vorstehendes Merkmal a. ist hinsichtlich des Faktors Energiedichte sehr vorteilhaft. Die unmittelbare Verbindung zwischen dem Stromkollektor dem Boden des Fixiersegments trägt zu einer Bauteilreduzierung und zur Eliminierung von Totvolumen bei.

Im Fall der Realisierung des unmittelbar vorstehenden Merkmals b. kommt als Stromleiter bevorzugt ein Kontaktblechteil zum Einsatz wie es in der WO 2017/215900 A1 oder der US 7364817 B2 beschrieben ist.

### Gehäuse

Besonders bevorzugt zeichnet sich das Energiespeicherelement durch die unmittelbar folgenden Merkmale a. und b. aus:
a. Das Gehäuse umfasst ein metallisches Gehäuseteil, das einen Gehäuseboden, eine umlaufende Seitenwand oder mehrere Seitenwände und eine endständige Öffnung umfasst.
b. Die Verschlussbaugruppe verschließt die endständige Öffnung des metallischen Gehäuseteils.

Bevorzugt ist das Gehäuse zylindrisch oder prismatisch ausgebildet. Im ersten Fall handelt es sich bei dem metallischen Gehäuseteil bevorzugt um einen Gehäusebecher mit kreisförmiger Grundfläche. Der Gehäusebecher umfasst dann die umlaufende Seitenwand. Im zweiten Fall ist die Grundfläche bevorzugt polygonal, insbesondere rechteckig. Das metallische Gehäuseteil umfasst dann bevorzugt mindestens vier Seitenwände. Die Verschlussbaugruppe weist bevorzugt jeweils die gleiche Form wie die Grundfläche.

Die Verschlussbaugruppe kann in die endständige Öffnung eingeschweißt werden. Abhängig vom Einzelfall kann die Verschlussbaugruppe aber auch mechanisch in der Öffnung fixiert werden.

Die Komponenten des Gehäuses des Energiespeicherelements, insbesondere das metallische Gehäuseteil mit der umlaufenden Seitenwand bzw. den Seitenwänden und der endständigen Öffnung sowie außenliegende metallische Komponenten der Deckelbaugruppe, bestehen in vielen Ausführungsformen bevorzugt aus Aluminium oder aus einer Aluminiumlegierung.

Geeignete Aluminiumlegierungen für das becherförmig ausgebildete Gehäuseteil und die Deckelplatte sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

In anderen bevorzugten Ausführungsformen bestehen die Gehäusekomponenten des Energiespeicherelements aus Kupfer oder Nickel oder einer Kupfer- oder Nickellegierung oder Stahl oder vernickeltem Stahl.

Geeignete Edelstähle sind beispielsweise Edelstähle vom Typ 1.4303 oder 1.4404 oder vom Typ SUS304 oder vernickelte Stähle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage.

In bevorzugten Ausführungsform der Erfindung zeichnet sich das erfindungsgemäße Energiespeicherelement durch mindestens eines der unmittelbar folgenden Merkmale a. bis c. aus:
a. Der Gehäuseboden des metallischen Gehäuseteils weist eine Dicke im Bereich von 200 µm bis 2000 µm auf.
b. Die Seitenwand oder die Seitenwände des metallischen Gehäuseteils weist oder weisen eine Dicke im Bereich von 150 µm bis 2000 µm auf.
c. Das erste Metallblechteil weist eine Dicke im Bereich von 0,1 mm bis 1,5 mm, bevorzugt im Bereich von 0,2 mm bis 0,6 mm, auf.
d. Das zweite Metallblechteil weist eine Dicke im Bereich von 0,1 mm bis 1,5 mm, bevorzugt im Bereich von 0,2 mm bis 0,6 mm, auf.

Besonders bevorzugt sind die unmittelbar vorstehenden Merkmale a. bis d. in Kombination realisiert.

### Dichtung

Bei der Dichtung handelt es sich bevorzugt um ein Polymermaterial, beispielsweise um ein Polyolefin oder um ein Polyamid oder ein Polyetherketon.

Bei der Dichtung kann es sich grundsätzlich aber auch um ein Glas oder ein keramisches Material handeln.

Wichtig ist, dass die Dichtung elektrisch isolierende Eigenschaften besitzt und - bei Verwendung eines flüssigen Elektrolyten - dass sie chemisch stabil gegenüber diesem ist.

Besonders bevorzugt weist die Dichtung eine Dicke im Bereich von 0,1 mm bis 1,5 mm, bevorzugt im Bereich von 0,2 mm bis 0,8 mm, auf.

### Aufbau des Elektroden-Separator-Verbunds

Es ist weiterhin bevorzugt, dass sich das erfindungsgemäße Energiespeicherelement durch die unmittelbar folgenden Merkmale a. bis g. auszeichnet:
a. Der Elektroden-Separator-Verbund umfasst eine erste endständige Stirnseite und eine zweite endständige Stirnseite.
b. Der Elektroden-Separator-Verbund umfasst mindestens eine Anode mit einem Anodenstromkollektor, der einen ersten Rand und einen dazu parallelen zweiten Rand aufweist.
c. Der Anodenstromkollektor umfasst einen Hauptbereich, der mit einer Schicht aus negativem Elektrodenmaterial beladen ist, sowie einen freien Randstreifen, der sich entlang seines ersten Rands erstreckt und der nicht mit dem Elektrodenmaterial beladen ist.
d. Der Elektroden-Separator-Verbund umfasst mindestens eine Kathode mit einem Kathodenstromkollektor, der einen ersten Rand und einen dazu parallelen zweiten Rand aufweist.
e. Der Kathodenstromkollektor umfasst einen Hauptbereich, der mit einer Schicht aus positivem Elektrodenmaterial beladen ist, sowie einen freien Randstreifen, der sich entlang seines ersten Rands erstreckt und der nicht mit dem Elektrodenmaterial beladen ist.
f. Die Anode und die Kathode sind innerhalb des Elektroden-Separator-Verbunds derart angeordnet, dass der erste Rand des Anodenstromkollektors aus der ersten endständigen Stirnseite und der erste Rand des Kathodenstromkollektors aus der zweiten endständigen Stirnseite des Elektroden-Separator-Verbunds austritt.
g. Der erste Rand des Anodenstromkollektors oder der erste Rand des Kathodenstromkollektors ist unmittelbar an die Außenseite des Bodens, der die rohrförmige Durchführung auf der zweiten Seite verschließt, geschweißt.

Wenn das Gehäuse des erfindungsgemäßen Energiespeicherelements prismatisch ausgebildet ist, dann ist in der Regel auch der Elektroden-Separator-Verbund prismatisch ausgebildet. Bei dem Elektroden-Separator-Verbund handelt es sich in diesem Fall bevorzugt um einen prismatischen Stapel aus mehreren Anoden, Kathoden und mindestens einem Separator, wobei der Elektroden-Separator-Verbund innerhalb des Stapels stets die Sequenz Anode / Separator / Kathode aufweist.

Zumindest die Anoden und Kathoden weisen bevorzugt eine rechteckige Grundfläche auf, wobei die Stromkollektoren der Anoden und der Kathoden jeweils den ersten und den dazu parallelen zweiten Rand aufweisen und jeweils entlang ihres ersten Randes den freien Randstreifen aufweisen, der nicht mit dem jeweiligen Elektrodenmaterial beschichtet ist.

Im Falle mehrerer Separatoren zwischen den Anoden und Kathoden weisen die Separatoren bevorzugt ebenfalls eine rechteckige Grundfläche auf. Es ist jedoch auch möglich, dass ein bandförmiger Separator zum Einsatz kommt, der mehrere Anoden und Kathoden innerhalb des Stapels voneinander trennt.

Bei der ersten und der zweiten flachen endständigen Stirnseite handelt es sich beispielsweise um zwei gegenüberliegende oder benachbarte Seiten des Stapels. Aus einer dieser Stirnseiten treten die ersten Ränder der Anodenstromkollektoren hervor, aus der anderen die ersten Ränder der Kathodenstromkollektoren.

Wie oben bereits ausgeführt, handelt es sich bei dem Stromleiter, der in einer Ausführungsform des erfindungsgemäßen Energiespeicherelements an einen Stromkollektor und an die Außenseite des Bodens geschweißt ist, bevorzugt um ein Kontaktblechteil. In besonders bevorzugten Ausführungsformen sitzt dieses auf den ersten Rändern der Anodenstromkollektoren oder den ersten Rändern der Kathodenstromkollektoren auf und ist mit diesen durch Verschweißung verbunden.

Wenn das erfindungsgemäße Energiespeicherelement als Rundzelle ausgebildet ist, dann umfasst der Elektroden-Separator-Verbund bevorzugt bandförmige Elektroden und einen bandförmigen Separator oder zwei bandförmige Separatoren, der oder die jeweils einen ersten und einen zweiten Längsrand sowie zwei Endstücke aufweisen. Der Elektroden-Separator-Verbund umfasst die Elektroden und den oder den Separator stets mit der Sequenz Anode / Separator / Kathode.

Bevorzugt liegen die bandförmige Anode, die bandförmige Kathode und der oder die bandförmigen Separatoren spiralförmig aufgewickelt vor. Zur Herstellung des Elektroden-Separator-Verbunds werden vorzugsweise die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Aus den Stirnseiten des gebildeten Wickels treten die ersten Ränder des Anodenstromkollektors und des Kathodenstromkollektors hervor.

Bevorzugt liegt die Höhe eines als zylindrische Rundzelle ausgebildeten erfindungsgemäßen Energiespeicherelements im Bereich von 50 mm bis 150 mm und ihr Durchmesser bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Der Anodenstromkollektor, der Kathodenstromkollektor und der Separator oder die Separatoren weisen in Ausführungsformen, bei denen das erfindungsgemäße Energiespeicherelement eine zylindrische Rundzelle ist, bevorzugt die folgenden Dimensionen auf:
- Eine Länge im Bereich von 0,5 m bis 25 m
- Eine Breite im Bereich 30 mm bis 145 mm

### Bevorzugte Ausführungsformen des Separators

Bevorzugt werden der Separator oder die Separatoren aus elektrisch isolierenden Kunststofffolien gebildet. Es ist bevorzugt, dass die Separatoren von dem Elektrolyten durchdrungen werden können. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen besonders bevorzugten Ausführungsformen werden Separatoren verwendet, die mit keramischen Partikeln (z.B. Al₂O₃ oder SiOz) ein- oder beidseitig beschichtet oder imprägniert sind.

Insbesondere bei den prismatischen Ausführungsformen des Energiespeicherelements kann es sich bei dem Separator oder den Separatoren des Verbundes auch um eine oder mehrere Schichten aus einem Festelektrolyten handeln.

Im Fall der oben beschriebenen Konfiguration des Energiespeicherelements als zylindrische Rundzelle ist es bevorzugt, dass die Längsränder des oder der Separatoren die Stirnseiten des als Wickel ausgebildeten Elektroden-Separator-Verbunds bilden.

Im Fall der beschriebenen prismatischen Konfiguration des Energiespeicherelements ist es bevorzugt, dass die Ränder des oder der Separatoren die Stirnseiten des Stapels bilden, aus denen die Ränder der Stromkollektoren hervortreten.

### Stromkollektoren

Die Stromkollektoren des Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine Metallfolie mit einer Dicke im Bereich von 4 µm bis 30 µm, im Fall der beschriebenen Konfiguration des Energiespeicherelements als zylindrische Rundzelle um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist weiterhin bevorzugt, dass die aus den endständigen Stirnseiten des Wickels oder Seiten des Stapels austretenden Längsränder oder Ränder des Anodenstromkollektors und/oder des Kathodenstromkollektors nicht mehr als 5000 µm, bevorzugt nicht mehr als 3500 µm, aus den Stirnseiten oder den Seiten herausragen.

### Elektrochemie

In einer weiteren besonders bevorzugten Ausführungsform der Erfindung zeichnet sich das erfindungsgemäße Energiespeicherelement durch eines der unmittelbar folgenden Merkmale a. und b. aus:
a. Das Energiespeicherelement ist eine Lithium-Ionen-Zelle.
b. Das Energiespeicherelement umfasst eine Lithium-lonen-Zelle.

Merkmal a. bezieht sich insbesondere auf die beschriebene Ausführungsform des erfindungsgemäßen Energiespeicherelements als zylindrische Rundzelle oder Knopfzelle. In dieser Ausführungsform umfasst oder ist das Energiespeicherelement bevorzugt genau eine elektrochemische Zelle.

Merkmal b. bezieht sich insbesondere auf die beschriebene prismatische Ausführungsform des erfindungsgemäßen Energiespeicherelements. In dieser Ausführungsform kann das Energiespeicherelement auch mehr als eine elektrochemische Zelle umfassen.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoOz und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Das erfindungsgemäße Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität eines als zylindrische Rundzelle ausgebildeten erfindungsgemäßen Energiespeicherelements auf Lithium-Ionen-Basis beträgt bevorzugt bis zu 15000 mAh. Mit einem Formfaktor von 21 x 70 hat das Energiespeicherelement in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit einem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Ausführungsform auf Natrium-Ionen-Basis

In weiteren Ausführungsformen kann es sich bei dem erfindungsgemäßen Energiespeicherelement auch um eine Natrium-Ionen-Zelle, eine Kalium-Ionen-Zelle, eine Calcium-Ionen-Zelle, eine Magnesium-Ionen-Zelle oder eine Aluminium-Ionen-Zelle handeln. Unter diesen Varianten sind Energiespeicherzellen mit Natrium-Ionen-Zellchemie erfindungsgemäß besonders bevorzugt.

Bevorzugt umfasst das erfindungsgemäße Energiespeicherelement auf Basis von Natrium-Ionen einen Elektrolyten, der mindestens eines der folgenden Lösungsmittel und mindestens eines der folgenden Leitsalze umfasst:
- Als Lösungsmittel kommen insbesondere organische Carbonate, Ether, Nitrile und Mischungen daraus in Frage.
- Bevorzugte Leitsalze sind NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Dem Elektrolyten können in bevorzugten Ausführungsformen Additive zugesetzt sein.

Bei dem negativen Elektrodenmaterial eines erfindungsgemäßen Energiespeicherelements auf Basis von Natrium-Ionen handelt es sich beispielsweise um eines der folgenden Materialien:
- Kohlenstoff, besonders präferiert Hardcarbon (rein oder mit Stickstoff- und/oder Phosphor-Dotierung) oder Softcarbon oder Graphene-basierte Materialien, Kohlenstoffnanotubes, Graphit
- Phosphor oder Schwefel
- Polyanionen wie Na₂Ti₃O₇, Na₃Ti₂(PO₄)₃, TiP₂O₇, TiNb₂O₇, Na-Ti-(PO₄)₃, Na-V-(PO₄)₃
- Übergangsmetalloxide wie V₂O₅, MnO₂, TiOz, NbzOs, Fe₂O₃, Na₂Ti3O₇, NaCrTiO₄, Na₄Ti₅O₁₂

Alternativ kann anodenseitig grundsätzlich auch eine Na-Metallanode zum Einsatz kommen.

Bei dem positiven Elektrodenmaterial eines erfindungsgemäßen Energiespeicherelements auf Basis von Natrium-Ionen handelt es sich beispielsweise um eines der folgenden Materialien:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, NaCoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(NiFeCo)₃O₂, Na(NiFeMn)O₂, and Na(NiFeCoMn)O₂, Na(NiMnCo)O₂

Daneben enthalten die Elektroden eines erfindungsgemäßen Energiespeicherelements auf Basis von Natrium-Ionen bevorzugt ebenfalls einen Elektrodenbinder und/oder ein Additiv zur Verbesserung der elektrischen Leitfähigkeit. Diesbezüglich besteht im Grunde kein Unterschied zu einer Ausführungsform auf Basis von Lithium-Ionen-Technologie.

Besonders bevorzugt bestehen bei einem erfindungsgemäßen Energiespeicherelement auf Basis von Natrium-lonen-Technologie sowohl der Anoden- als auch der Kathodenstromkollektor aus Aluminium oder einer Aluminiumlegierung. Auch das Gehäuse und sowie ggf. vorhandene weitere Stromleiter innerhalb des Gehäuses können aus Aluminium oder aus der Aluminiumlegierung bestehen.

### Kontaktblechteil

Es ist weiterhin bevorzugt, dass sich das erfindungsgemäße elektrochemische Energiespeicherelement durch die unmittelbar folgenden Merkmale a. und b. oder a. und c. auszeichnet:
a. Das Energiespeicherelement umfasst ein Kontaktblechteil, das unmittelbar auf dem ersten Rand des Anodenstromkollektors oder auf dem ersten Rand des Kathodenstromkollektors aufsitzt.
b. Bei dem Kontaktblechteil handelt es sich um den Stromleiter, der an die Außenseite des Bodens, der die rohrförmige Durchführung auf der zweiten Seite verschließt, geschweißt ist.
c. Bei dem Kontaktblechteil handelt es sich um den Boden, der die rohrförmige Durchführung auf der zweiten Seite verschließt.

Das Kontaktblechteil ist oben bereits angesprochen worden. Es besteht beispielsweise aus Aluminium oder Nickel oder Kupfer oder Titan oder Edelstahl.

Unmittelbar vorstehendes Merkmal c. ist besonders bevorzugt.

### Bodenseitige Kontaktierung von Stromkollektoren

In bevorzugten Ausführungsformen zeichnet sich das erfindungsgemäße elektrochemische Energiespeicherelement durch das unmittelbar folgende Merkmal a. aus:
a. Der nicht mit dem Kontaktblechteil in unmittelbarem Kontakt stehende erste Rand des Kathodenstromkollektors oder des Anodenstromkollektors ist elektrisch mit dem Gehäuseboden verbunden.

Besonders bevorzugt ist der nicht mit dem Kontaktblechteil in unmittelbarem Kontakt stehende erste Rand des Kathodenstromkollektors oder des Anodenstromkollektors an den Gehäuseboden geschweißt.

### Design des Fixier- und des Kontaktsegments sowie der rohrförmigen Durchführung

Das Fixiersegment zeichnet sich bevorzugt durch die folgenden Merkmale aus:
a. Der Boden, der die rohrförmige Durchführung auf der zweiten Seite verschließt, weist mindestens eine Sicke auf.
b. Die mindestens eine Sicke ist länglich ausgebildet.
c. Die mindestens eine Sicke tritt auf der Innenseite des Bodens als Vertiefung und auf der Außenseite des Bodens als Erhöhung auf.

Besonders bevorzugt ist der Stromkollektor, der unmittelbar an die Außenseite des Bodens, der die rohrförmige Durchführung auf der zweiten Seite verschließt, geschweißt ist, an die Erhöhung geschweißt.

Es hat sich in einigen Ausführungsformen als vorteilhaft erwiesen, auch den Rand des Stromkollektors, der an die Erhöhung geschweißt ist, einer Vorbehandlung zu unterziehen, damit der Kontakt zwischen dem Gehäuseboden und dem Stromkollektor verbessert wird. Insbesondere kann in den Rand mindestens eine Vertiefung eingebracht werden, die zu der mindestens einen Sicke bzw. der länglichen Erhöhung auf der Innenseite des Gehäusebodens korrespondiert.

Der Rand des Stromkollektors kann auch durch eine Vorbehandlung einer gerichteten Umformung unterzogen worden sein. Beispielsweise kann er in eine definierte Richtung umgebogen sein.

Das Kontaktsegment zeichnet sich bevorzugt durch die folgenden Merkmale aus:
a. Es umfasst einen ringkreisförmigen Bereich um die Durchbrechung herum.
b. Es umfasst mindestens einen abwinkelbaren, an den ringkreisförmigen Bereich angeformten weiteren Bereich.

Über den abwinkelbaren, an den ringkreisförmigen Bereich angeformten weiteren Bereich kann beispielsweise ein Steckkontakt angeschlossen werden.

Die rohrförmige Durchführung weist in einigen Ausführungsformen einen kreisförmigen, in anderen einen ovalen Querschnitt auf. Auch längliche und eckige Querschnitte wie beispielsweise ein sechseckiger Querschnitt können bevorzugt sein. Entsprechend muss der Bereich um die Durchbrechung herum auch nicht zwingend ringkreisförmig sein.

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### KURZBESCHREIBUNG DER ZEICHNUNGEN

In den Zeichnungen zeigen schematisch:
Fig. 1 eine schematische Illustration der Verschlussbaugruppe eines erfindungsgemäßen Energiespeicherelements;
Fig. 2 eine schematische Illustration der Herstellung einer Verschlussbaugruppe gemäß Fig. 1;
Fig. 3 eine schematische Illustration der Herstellung einer weiteren Ausführungsform der Verschlussbaugruppe eines erfindungsgemäßen Energiespeicherelements;
Fig. 4 eine mögliche Ausführungsform eines erfindungsgemäßen Energiespeicherelements mitsamt der in Fig. 1 dargestellten Verschlussbaugruppe;
Fig. 5 ein bevorzugtes Beispiel eines Elektroden-Separator-Verbunds, der Bestandteil des erfindungsgemäßen Energiespeicherelements ist, sowie dessen Komponenten; und
Fig. 6 eine schematische Illustration der Herstellung einer weiteren Ausführungsform der Verschlussbaugruppe eines erfindungsgemäßen Energiespeicherelements.

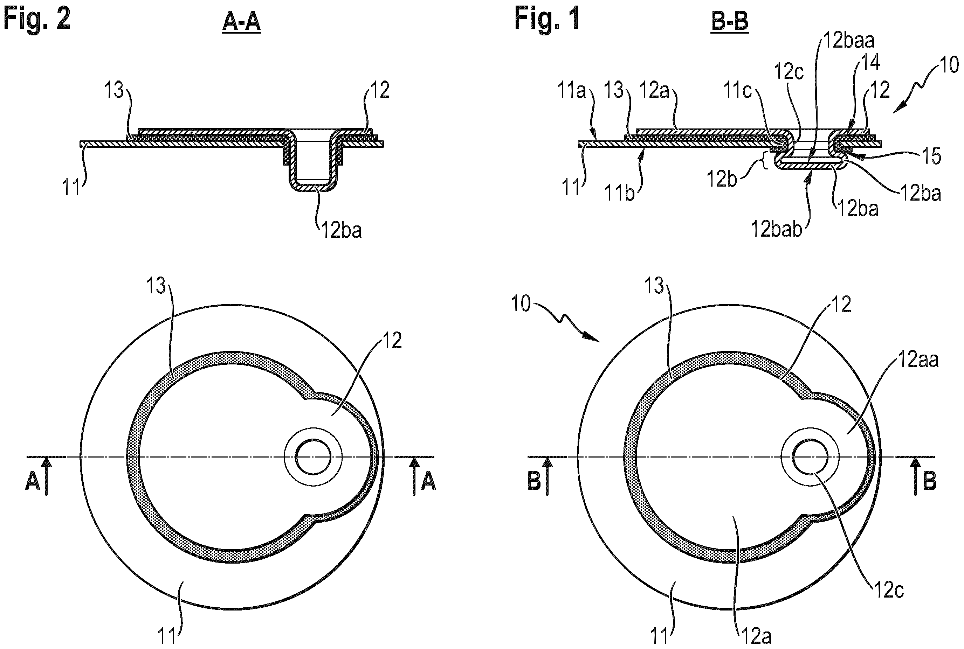

In **Fig.** 1 ist die Herstellung der Verschlussbaugruppe 10 eines erfindungsgemäßen Energiespeicherelements 100 dargestellt. Bei der unteren Darstellung handelt es sich um eine Draufsicht von oben, bei der oberen um einen Schnitt entlang der Achse BB.

Diese umfasst ein erstes Metallblechteil 11 mit einer ersten Seite 11a, einer gegenüberliegenden zweiten Seite 11b und einer Durchbrechung 11c, sowie ein zweites Metallblechteil 12 mit einem Kontaktsegment 12a, einem Fixiersegment 12b und einer rohrförmigen Durchführung 12c, wobei sich das Kontaktsegment 12a auf der ersten Seite 11a und das Fixiersegment 12b auf der zweiten Seite 11b des ersten Metallblechteils 11 erstreckt und die rohrförmige Durchführung 12c die beiden Segmente 12a und 12b durch die Durchbrechung 11c hindurch verbindet. Weiterhin umfasst die Verschlussbaugruppe 10 die elektrisch isolierende Dichtung 13, die zwischen dem ersten Metallblechteil 11 und dem zweiten Metallblechteil 12 angeordnet ist und diese elektrisch voneinander isoliert. Ein erster Teil des Fixiersegments 12b ist als Boden 12ba, der die rohrförmige Durchführung 12c auf der zweiten Seite 11b verschließt, ausgebildet, wobei der Boden 12ba eine in Richtung der Durchführung 12c gerichtete Innenseite 12baa und eine in eine Gegenrichtung gerichtete Außenseite 12bab aufweist. Ein zweiter Teil des Fixiersegments 12b ist als Auskragung 12bb, die eine formschlüssige Fixierung der rohrförmigen Durchführung 12c in der Durchbrechung 11c und damit einen festen Zusammenhalt des ersten Metallblechteils 11 und des zweiten Metallblechteils 12 gewährleistet, ausgebildet. Die erste Seite 11a des ersten Metallblechteils 11 und das Kontaktsegment 12a begrenzen hierbei einen ersten Spalt 14, während die zweite Seite 11b des ersten Metallblechs 11 und die Auskragung 12bb einen zweiten Spalt 15 begrenzen. Die Dichtung 13 befüllt den ersten Spalt 14 und den zweiten Spalt 15 derart, dass die erste Seite 11a von der zweiten Seite 11b gas- und/oder flüssigkeitsdicht getrennt ist.

Im vorliegenden Fall weist die Verschlussbaugruppe 10 eine asymmetrische Geometrie auf. Es ist bei entsprechender Anpassung der Metallblechteile 11 und 12 sowie der Dichtung 13 problemlos möglich, die Durchbrechung 11c bzw. die Durchführung 12c ins Zentrum der Verschlussbaugruppe 10 zu legen.

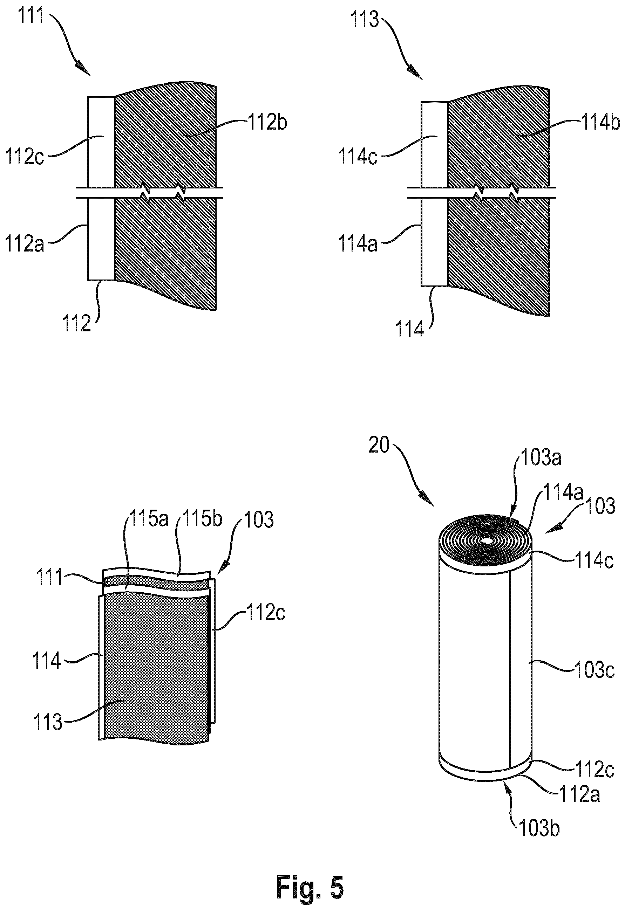

Verschlussbaugruppen in der dargestellten Ausführungsform kommen bevorzugt in Kombination mit einem Kontaktblechteil zum Einsatz, welches unmittelbar auf dem ersten Rand 112a des Anodenstromkollektors 112 oder auf dem ersten Rand 114a des Kathodenstromkollektors 114 eines Elektroden-Separator-Verbunds 20, wie er in Fig. 5 dargestellt ist, aufsitzt, und bevorzugt mit diesem Rand durch Verschweißung verbunden ist. Das Kontaktblechteil ist in diesen Fällen bevorzugt durch Verschweißung mit dem Boden 12ba verbunden.

Zur Herstellung der in Fig. 1 dargestellten Verschlussbaugruppe kann beispielsweise von dem in **Fig. 2** dargestellten Vorprodukt ausgegangen werden. Auch hier handelt es sich bei der unteren Darstellung um eine Draufsicht von oben, bei der oberen um einen Schnitt entlang der Achse AA.

Das erste Metallblechteil 11 hat bereits seine endgültige Form, während das zweite Metallblechteil 12 noch umgeformt werden muss. Die Umformung kann beispielsweise mittels eines Stempels erfolgen, der von unten gegen den Boden 12ba gepresst wird. Hierbei werden dann die in Fig. 1 dargestellte Auskragung 12bb sowie der Spalt 14 und der Spalt 15 gebildet. Gleichzeitig wird die Dichtung 13 zumindest in Teilbereichen innerhalb des Spalts 14 und des Spalts 15 komprimiert.

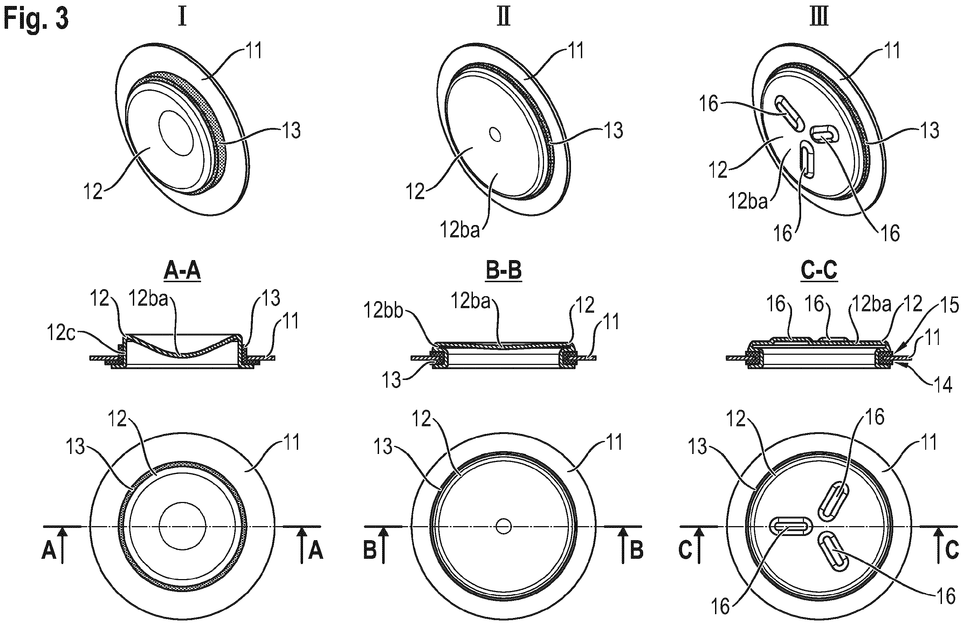

In der in **Fig. 3** dargestellten Vorgehensweise wird gleichfalls von einem Vorprodukt ausgegangen (Schritt I), das aus dem Metallblechteil 11, dem Metallblechteil 12 und der Dichtung 13 zusammengesetzt ist. Das Metallblechteil 12 umfasst den Boden 12ba, der nach innen gewölbt ist. Das Metallblechteil 12 ist mit dem Boden 12ba voraus samt der Dichtung 13 in die Durchbrechung 11c eingeschoben. Es folgt eine Umformung (Schritt II), bei der die Auskragung 12bb sowie der Spalt 14 und der Spalt 15 gebildet werden. Gleichzeitig wird die Dichtung 13 innerhalb des Spalts 14 und des Spalts 15 komprimiert. Abschließend werden in den Boden 12ba drei längliche Sicken 16 eingeprägt. Diese Sicken 16 dienen zur elektrischen Kontaktierung des Elektroden-Separator-Verbunds 20 eines erfindungsgemäßen Energiespeicherelements 100.

Bei den Darstellungen unten handelt es sich jeweils um eine Draufsicht senkrecht von unten. Bei den oberen Darstellungen handelt es sich um perspektivische Ansichten der Unterseite der Deckelbaugruppe. Bei den Darstellungen in der Mitte um Schnitte entlang der Achsen AA, BB und CC.

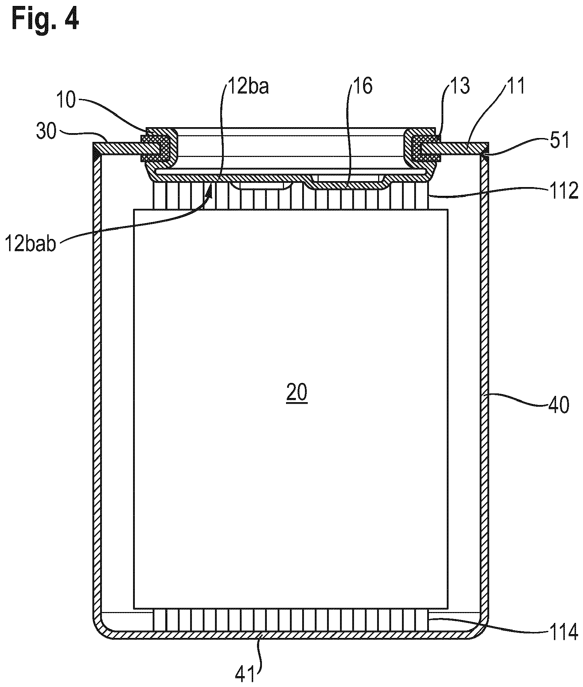

Das in **Fig. 4** im Schnitt dargestellte erfindungsgemäße Energiespeicherelement 100 umfasst den Elektroden-Separator-Verbund 20 und das Gehäuse 30, das den Elektroden-Separator-Verbund 20 umschließt. Das Gehäuse 30 besteht im Wesentlichen aus der Verschlussbaugruppe 10 und dem Metallbecher 40, wobei die Verschlussbaugruppe der in Fig. 3 dargestellten entspricht. Der Elektroden-Separator-Verbund 20 umfasst einen Stromkollektor 112, der unmittelbar an die Außenseite 12bab des Bodens 12ba, der die rohrförmige Durchführung 12c auf der zweiten Seite 11b verschließt, geschweißt ist. Der Stromkollektor 112 ist mit einem negativen Elektrodenmaterial (siehe Figur 5) beschichtet, nicht jedoch in dem Randbereich, der an den Boden 12ba des Verschlussbauteils 10 geschweißt ist. Ein zweiter Stromkollektor 114, der bereichsweise mit einem positiven Elektrodenmaterial beschichtet ist, ist an den Gehäuseboden 41 des Metallbechers 40 geschweißt. Der Metallbecher 40 besteht bevorzugt aus Aluminium.

Ein bevorzugter Aufbau des in Fig. 4 ohne Details dargestellten Elektroden-Separator-Verbunds 20 geht aus **Fig. 5** hervor. Der Elektroden-Separator-Verbund 20 umfasst eine bandförmige Anode 111 mit einem bandförmigen Anodenstromkollektor 112 und eine bandförmige Kathode 113 mit einem bandförmigen Kathodenstromkollektor 114. Bei dem Anodenstromkollektor 112 handelt es sich bevorzugt um eine Folie aus Kupfer oder Nickel. Bei dem Kathodenstromkollektor 114 handelt es sich bevorzugt um eine Aluminiumfolie. Sowohl der Anodenstromkollektor 112 als auch der Kathodenstromkollektor 114 weisen einen ersten Längsrand 112a, 114a und einen zweiten Längsrand, einen Hauptbereich 112b, 114b sowie einen freien Randstreifen 112c, 114c auf. Die Hauptbereiche 112b, 114b sind mit einer Schicht aus Elektrodenmaterial beladen, im Fall der Anode 111 mit negativem Elektrodenmaterial, im Fall der Kathode 113 mit positivem Elektrodenmaterial. Die freien Randstreifen 112c, 114c erstrecken sich entlang des jeweils ersten Längsrands 112a, 114a und sind nicht mit Elektrodenmaterial beladen. Beide Elektroden sind einzeln in ungewickeltem Zustand dargestellt. Innerhalb des gewickelten Elektroden-Separator-Verbunds 103 sind die Anode 111 und die Kathode 113 versetzt zueinander angeordnet, derart, dass der erste Längsrand 114a des Kathodenstromkollektors 114 aus der ersten endständigen Stirnseite 103a des Elektroden-Separator-Verbunds 103 austritt. Der erste Längsrand 112a des Anodenstromkollektors 112 tritt aus der zweiten endständigen Stirnseite 103c des Elektroden-Separator-Verbunds aus. Dies ist in der Darstellung rechts unten gut zu erkennen. Die versetzte Anordnung geht aus der Darstellung links unten hervor. Dort sind auch zwei bandförmige Separatoren 115a und 115b dargestellt, die im Wickel die Elektroden 111, 113voneinander trennen. Der Wickelmantel 103b des Elektroden-Separator-Verbunds 103 wird meist durch eine Kunststofffolie gebildet.

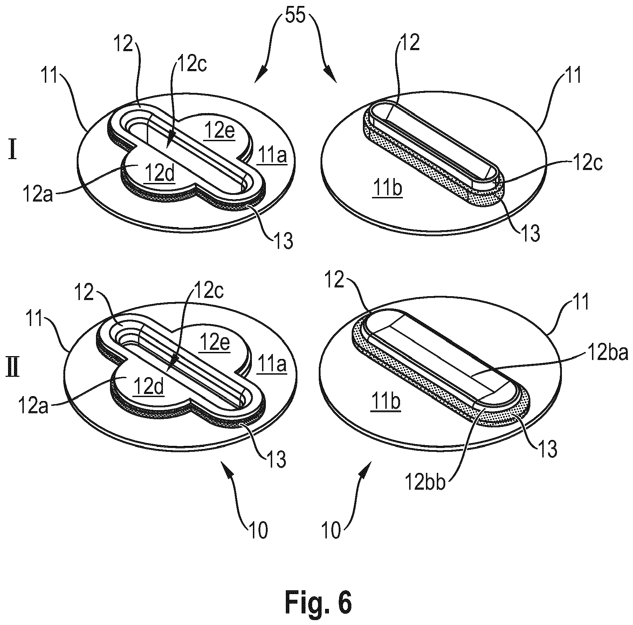

In der in **Fig. 6** dargestellten Vorgehensweise wird von einem Vorprodukt 55 ausgegangen, das aus dem ersten kreisrunden Metallblechteil 11, dem zweiten Metallblechteil 12 und der Dichtung 13 zusammengesetzt ist. Links ist das Vorprodukt in einer Draufsicht auf die erste Seite 11a des Metallblechteils 11 dargestellt, rechts in einer Draufsicht auf die zweite Seite 11b des Metallblechteils 11.

Das zweite Metallblechteil 12 umfasst das Kontaktsegment 12a und eine rohrförmige Durchführung 12c. Das Kontaktsegment 12a erstreckt sich auf der ersten Seite 11a des ersten Metallblechteils 11 und zeichnet sich durch zwei symmetrische Kontaktbereiche 12d und 12e aus, an die Stromleiter angeschweißt werden können. Die rohrförmige Durchführung 12c ist länglich ausgebildet.

Das Metallblechteil 12 ist mit dem Boden 12ba (nach innen gewölbt und in der Darstellung des Vorprodukts nicht sichtbar) voraus samt der Dichtung 13 in eine Durchbrechung in dem Metallblechteil 11 eingeschoben. Die Durchbrechung ist länglich ausgebildet und erstreckt sich durch das Zentrum des Metallblechteils 11. Ihre Länge beträgt mehr als zwei Drittel des Durchmessers des Metallblechteils 11. Die Form der rohrförmigen Durchführung 12c ist hieran angepasst.

Eine Umformung, die zur Bildung der Verschlussbaugruppe 10 führt, beinhaltet ein Umbiegen des durch die Durchbrechung geführten Teils des Metallblechteils 12 nach außen unter Bildung der Auskragung 12bb. Dabei tritt der im Vorprodukt 55 ins Innere gewölbte Boden 12ba zum Vorschein. An den Boden 12a kann beispielsweise der Rand eines Stromkollektors geschweißt werden.

## Patentansprüche

1. Elektrochemisches Energiespeicherelement 100 mit
- einem Elektroden-Separator-Verbund 20 und
- einem Gehäuse 30, das den Elektroden-Separator-Verbund 20 umschließt,
wobei sich das Energiespeicherelement durch die folgenden Merkmale auszeichnet:
a. Das Gehäuse 30 umfasst eine Verschlussbaugruppe 10.
b. Die Verschlussbaugruppe 10 umfasst ein erstes Metallblechteil 11 mit einer ersten Seite 11a, einer gegenüberliegenden zweiten Seite 11b und einer Durchbrechung 11c;
c. Die Verschlussbaugruppe 10 umfasst ein zweites Metallblechteil 12 mit einem Kontaktsegment 12a, einem Fixiersegment 12b und einer rohrförmigen Durchführung 12c, wobei sich das Kontaktsegment 12a auf der ersten Seite 11a und das Fixiersegment 12b auf der zweiten Seite 11b des ersten Metallblechteils 11 erstreckt und die rohrförmige Durchführung 12c die beiden Segmente 12a und 12b durch die Durchbrechung 11c hindurch verbindet;
d. Die Verschlussbaugruppe 10 umfasst eine elektrisch isolierende Dichtung 13, die zwischen dem ersten Metallblechteil 11 und dem zweiten Metallblechteil 12 angeordnet ist und diese elektrisch voneinander isoliert;
e. Ein erster Teil des Fixiersegments 12b ist als Boden 12ba, der die rohrförmige Durchführung 12c auf der zweiten Seite 11b verschließt, ausgebildet, wobei der Boden 12ba eine in Richtung der Durchführung 12c gerichtete Innenseite 12baa und eine in eine Gegenrichtung gerichtete Außenseite 12bab aufweist und;
f. Ein zweiter Teil des Fixiersegments 12b ist als Auskragung 12bb, die eine formschlüssige Fixierung der rohrförmigen Durchführung 12c in der Durchbrechung 11c und damit einen festen Zusammenhalt des ersten Metallblechteils 11 und des zweiten Metallblechteils 12 gewährleistet, ausgebildet;
g. Die erste Seite 11a des ersten Metallblechteils 11 und das Kontaktsegment 12a begrenzen einen ersten Spalt 14;
h. Die zweite Seite 11b des ersten Metallblechs 11 und die Auskragung 12bb begrenzen einen zweiten Spalt 15;
i. Die Dichtung 13 befüllt den ersten Spalt 14 und den zweiten Spalt 15 derart, dass die erste Seite 11a von der zweiten Seite 11b gas- und/oder flüssigkeitsdicht getrennt ist; und
j. Der Elektroden-Separator-Verbund 20 ist mittels Verschweißung an die Außenseite 12bab des Bodens 12ba, der die rohrförmige Durchführung 12c auf der zweiten Seite 11b verschließt, angebunden.

2. Elektrochemisches Energiespeicherelement nach Anspruch 1 mit einem der folgenden zusätzlichen Merkmale:
a. Der Elektroden-Separator-Verbund 20 umfasst einen Stromkollektor 112 oder einen Stromkollektor 114, der unmittelbar an die Außenseite 12bab des Bodens 12ba, der die rohrförmige Durchführung 12c auf der zweiten Seite 11b verschließt, geschweißt ist.
b. Der Elektroden-Separator-Verbund 20 umfasst einen Stromkollektor, der an einen Stromleiter geschweißt ist, der unmittelbar an die Außenseite des Bodens, der die rohrförmige Durchführung auf der zweiten Seite verschließt, geschweißt ist.

3. Elektrochemisches Energiespeicherelement nach Anspruch 1 oder nach Anspruch 2 mit den folgenden zusätzlichen Merkmalen:
a. Das Gehäuse 30 umfasst ein metallisches Gehäuseteil 40, das einen Gehäuseboden 41, eine umlaufende Seitenwand 42 oder mehrere Seitenwände und eine endständige Öffnung umfasst.
b. Die Verschlussbaugruppe 10 verschließt die endständige Öffnung des metallischen Gehäuseteils 40.

4. Elektrochemisches Energiespeicherelement nach einem der vorhergehenden Ansprüche mit den folgenden zusätzlichen Merkmalen:
a. Der Elektroden-Separator-Verbund 20 umfasst eine erste endständige Stirnseite 103a und eine zweite endständige Stirnseite 103c.
b. Der Elektroden-Separator-Verbund 20 umfasst eine Anode 111 mit einem Anodenstromkollektor 112, der einen ersten Rand 112a und einen dazu parallelen zweiten Rand aufweist.
c. Der Anodenstromkollektor 112 umfasst einen Hauptbereich 112b, der mit einer Schicht aus negativem Elektrodenmaterial beladen ist, sowie einen freien Randstreifen 112c, der sich entlang seines ersten Rands 112a erstreckt und der nicht mit dem Elektrodenmaterial beladen ist.
d. Der Elektroden-Separator-Verbund 20 umfasst eine Kathode 113 mit einem Kathodenstromkollektor 114, der einen ersten Rand 114a und einen dazu parallelen zweiten Rand aufweist.
e. Der Kathodenstromkollektor 114 umfasst einen Hauptbereich 114b, der mit einer Schicht aus positivem Elektrodenmaterial beladen ist, sowie einen freien Randstreifen 114c, der sich entlang seines ersten Rands 114a erstreckt und der nicht mit dem Elektrodenmaterial beladen ist.
f. Die Anode 111 und die Kathode 113 sind innerhalb des Elektroden-Separator-Verbunds 20 derart angeordnet, dass der erste Rand 112a des Anodenstromkollektors 112 aus der ersten endständigen Stirnseite 103a und der erste Rand 114a des Kathodenstromkollektors 114 aus der zweiten endständigen Stirnseite 103c des Elektroden-Separator-Verbunds 20 austritt.
g. Der erste Rand 112a des Anodenstromkollektors 112 oder der erste Rand 114a des Kathodenstromkollektors 114 ist unmittelbar an die Außenseite 12bab des Bodens 12ba, der die rohrförmige Durchführung 12c auf der zweiten Seite 11b verschließt, geschweißt.

5. Elektrochemisches Energiespeicherelement nach Anspruch 4 mit mindestens einem der folgenden zusätzlichen Merkmale:
a. Das Energiespeicherelement umfasst ein Kontaktblechteil, das unmittelbar auf dem ersten Rand 112a des Anodenstromkollektors 112 oder auf dem ersten Rand 114a des Kathodenstromkollektors 114 aufsitzt.
b. Bei dem Kontaktblechteil handelt es sich um den Stromleiter, der an die Außenseite des Bodens, der die rohrförmige Durchführung auf der zweiten Seite verschließt, geschweißt ist.
c. Bei dem Kontaktblechteil handelt es sich um den Boden 12ba.

6. Elektrochemisches Energiespeicherelement nach einem der Ansprüche 4 oder 5 mit dem folgenden zusätzlichen Merkmal:
a. Der nicht an die Außenseite 12bab des Bodens 12ba geschweißte erste Rand 112a, 114a des Anodenstromkollektors 112 oder des Kathodenstromkollektors 114 ist elektrisch mit dem Gehäuseboden 41 verbunden.

7. Elektrochemisches Energiespeicherelement nach einem der vorhergehenden Ansprüche mit mindestens einem der folgenden zusätzlichen Merkmale:
a. Der Boden 12ba, der die rohrförmige Durchführung 12c auf der zweiten Seite 11b verschließt, weist mindestens eine Sicke 16 auf.
b. Die mindestens eine Sicke 16 ist länglich ausgebildet.
c. Die mindestens eine Sicke 16 tritt auf der Innenseite des Bodens 12ba als Vertiefung und auf der Außenseite des Bodens 12ba als Erhöhung auf.

8. Elektrochemisches Energiespeicherelement nach einem der vorhergehenden Ansprüche mit mindestens einem der folgenden zusätzlichen Merkmale:
a. Das Kontaktsegment 12a umfasst einen ringkreisförmigen Bereich 12aa um die Durchbrechung herum.
b. Das Kontaktsegment umfasst mindestens einen abwinkelbaren, an den ringkreisförmigen Bereich angeformten weiteren Bereich.
